# EUROPÄISCHE PATENTANMELDUNG

(11) **EP 1 236 583 A1**
(43) Veröffentlichungstag der Anmeldung: **04.09.2002**
(21) Anmeldenummer: 01105213.1
(22) Anmeldetag: 03.03.2001
(51) Int. Cl.: B41M 5/26, C09D 7/12, C08K 3/40

(54) **Verfahren zum Beschriften von Kunststoff**

(71) Anmelder: Pösl, Rudolf, Dipl.-Ing., 90543 Nürnberg (DE)
(72) Erfinder: Lenhart, Armin Prof. Dr., 91077 Neunkirchen a. Brand (DE)
(74) Vertreter: Christ, Dieter, Dipl.-Ing.

(57) **Zusammenfassung**

Die Erfindung betrifft ein Verfahren zum Beschriften von Kunststoff.

Zum Beschriften wird eine Farbe benutzt, bei der ein Kunststoffpulvergranulat mit Glaspigmenten versetzt ist.Durch die Energie eines Beschriftungslasers gelangen die Glaspigmente auf die zu beschriftende Oberfläche und bilden eine sehr gut haftende Schicht.

## Beschreibung

Es ist bekannt, mit Hilfe eines Infrarotlasers eine gut haftende metallische Beschriftung auf Glas, Keramik und Metall aufzubringen. Eine Übertragung dieses Verfahrens zur Kunststoffbeschriftung würde normalerweise zu einem Verbrennen der Kunststoffoberfläche führen.

Die Aufgabe der vorliegenden Erfindung besteht darin, ein Verfahren, eine Anordnung und eine Farbe anzugeben, mit der die Kunststoffbeschriftung durchgeführt werden kann.

Die Aufgabe wird durch die Ansprüche 1-6 gelöst

Als Beschriftungsfarbe wird gemahlenes, wasserklares Kunststoffpulver (1) mit einer Partikelgröße von ca. 5µm vermischt mit Glaspigmenten (2) (germahlenes farbiges Glas) verwendet. Diese Mischung wird feucht auf die zu beschriftende Oberfläche (3) des Kunststoffs aufgesprüht (Bild 1a). Ein enger gesteuerter Laserstrahl (4) (Bild 2a) im Infrarotbereich erwärmt die Glaspigmente (2), die ihrerseits das Kunststoffpulver (1) und die Oberfläche (3) zum Schmelzen bzw. Anschmelzen bringen. Beim Erstarren werden die Glaspigmente (2) zwischen dem Material des zu beschriftenden Kunststoffs und dem aufgeschmolzenen Kunststoffpulver (1) eingebettet (Bild 3a).

Mit diesem Verfahren entsteht eine farbige Beschriftung sehr guter Haftfähigkeit.

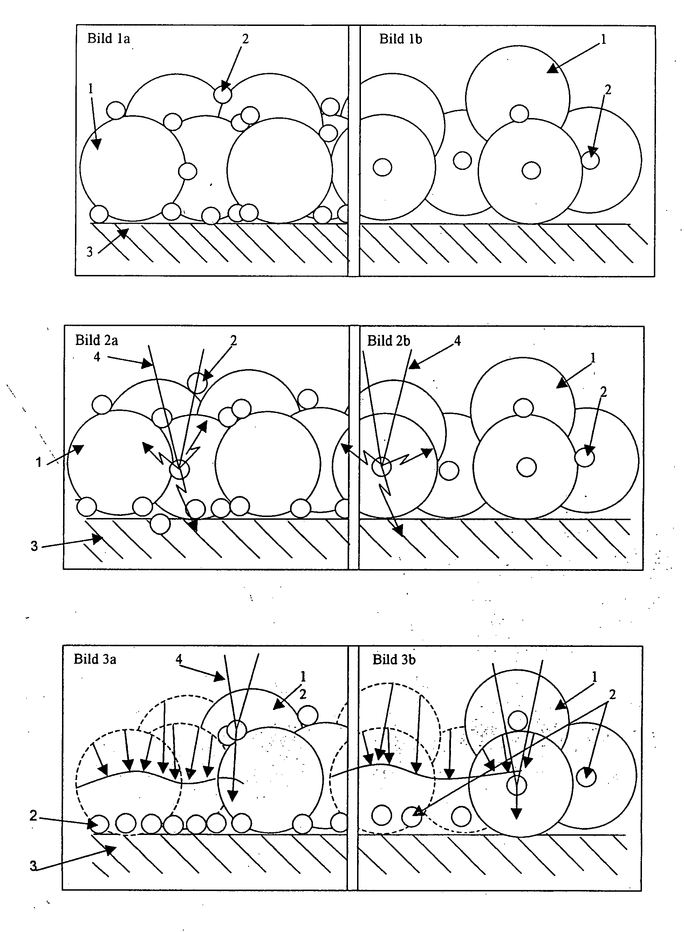

Gegebenenfalls können die Glaspigmente zur Stabilisierung mit Kunstststoff ummantelt werden (Bilder 1b-3b)

Weiter können an Stelle der Glaspigmente auch andere handelsübliche Pigmente oder Pigmentanordnungen eingesetzt werden, die die Aufgabe der Glaspigmente übernehmen können, z.B. Pigmente die an anderen Trägern angekettet sind.

## Patentansprüche

1. Verfahren zum Beschriften von Kunststoff mit Laser, bei dem ein Kunststoffpulvergranulat mit Glaspigmenten versetzt ist, die durch die Laserwirkung auf die zu beschriftende Oberfläche gelangen.

2. Anlage zur Durchführung des Verfahrens nach Anspruch 1, mit mindestens einem gesteuerten Laserstrahl, der auf ein mit Glaspigmenten versetztes Kunststoffpulvergranulat gerichtet ist.

3. Farbe zur Durchführung des Verfahrens nach Anspruch 1, **gekennzeichnet durch** eine Mischung von Kunststoffgranulat mit Glaspigmenten.

4. Verfahren nach Anspruch 1 mit einem Infrarotlaser, wasserklarem Kunststoffpulvergranulat von ca 3 - 8 µm Größe und Glaspigmenten kleiner 1 µ

5. Farbe zur Durchführung des Verfahrens nach Anspruch 1, **gekennzeichnet durch** eine Mischung von Kunststoffgranulat und Pigmenten, die nicht im Glas eingeschmolzen sind und zusätzlich zu der Farbgebung auch die Energie aufnehmen können um den Schmelzvorgang durchzuführen.

6. Farbe zur Durchführung des Verfahrens nach Anspruch 1, **gekennzeichnet durch** eine Mischung von Kunststoffgranulat und Pigmenten, die nicht im Glas eingeschmolzen sind und aus 2 Arten von Pigmenten bestehen, die einerseits **durch** Laserlicht Energie aufnehmen und den Schmelzvorgang übernehmen, und andererseits zur Farbgebung eingesetzt werden können.

7. Kunststoff, der nach obrigen Ansprüchen beschriftet ist
